(19) Europäisches Patentamt
European Patent Office
Office européen des brevets

(11) **EP 3 404 439 A1**

(12) **EUROPEAN PATENT APPLICATION**
published in accordance with Art. 153(4) EPC

(43) Date of publication:
**21.11.2018 Bulletin 2018/47**

(51) Int Cl.:
***G01S 5/02*** *(2010.01)*

(21) Application number: **16884720.0**

(22) Date of filing: **26.10.2016**

(86) International application number:
**PCT/CN2016/103427**

(87) International publication number:
**WO 2017/121168 (20.07.2017 Gazette 2017/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.01.2016 CN 201610016705**

(71) Applicant: **Chigoo Interactive Technology Co., Ltd.**
**Xinwu District**
**Wuxi**
**Jiangsu 214028 (CN)**

(72) Inventors:
• **WANG, Xinheng**
  **Wuxi**
  **Jiangsu 214028 (CN)**
• **ZHANG, Congcong**
  **Wuxi**
  **Jiangsu 214028 (CN)**
• **CHEN, Tao**
  **Wuxi**
  **Jiangsu 214028 (CN)**

(74) Representative: **Hautier IP**
**1, Rue du Gabian**
**Le Thalès - 12 Etg - Bloc A**
**98000 Monaco (MC)**

(54) **CLUSTER-BASED MAGNETIC POSITIONING METHOD, DEVICE AND SYSTEM**

(57) A method for locating an object using cluster-type magnetic field is disclosed. The method comprises obtaining a wireless signal and a magnetic field signal; performing a first locating for an object according to the wireless signal; and performing a second locating for the object according to the magnetic field signal in the range of the first locating. In addition, an apparatus and a system for locating an object using cluster-type magnetic field are also disclosed. Accordingly, the present invention performs a first rough locating for an object by a wireless signal and then a precise locating for the object in the range of the first locating, thus reducing the amount of calculation, lowering computational complexity and improving accuracy of locating

```
┌─────────────────────────────────────┐
│ obtaining a wireless signal and a    │
│ magnetic signal                      │──── S101
└─────────────────────────────────────┘
                  │
                  ▼
┌─────────────────────────────────────┐
│ performing a first locating for an   │
│ object according to the wireless     │──── S102
│ signal                               │
└─────────────────────────────────────┘
                  │
                  ▼
┌─────────────────────────────────────┐
│ performing a second locating for the │
│ object according to the magnetic     │──── S103
│ signal in the range of the first     │
│ locating                             │
└─────────────────────────────────────┘
```

Fig. 1

## Description

### CROSS REFERENCE TO RELATED APPLICATIONS

This application claims priority from and the benefit of Chinese Patent Application No. 201610016705.1, entitled "Method, Apparatus and System for Locating an Object using Cluster-Type Magnetic Field" and filed on 11 January 2016, which is incorporated herein by reference in its entirety.

### TECHNICAL FIELD

The present invention relates to the technical field of indoor locating, and particularly to a method, apparatus and system for locating an object using cluster-type magnetic field.

### BACKGROUND

Large-scale indoor space produced lots of magnetic fields due to various building materials and building structures. These magnetic fields and geomagnetic fields together constitute a complex magnetic field map. The magnetic field map in the building has its own unique laws since building materials and building structures used are conventional, thus the indoor magnetic fields produced are relatively stable. Such stable magnetic field is used for indoor locating. For example, Chinese Patent Application No.201310350209.6 and Chinese Patent Application No. 201410277471.7 disclosed a technical solution of locating and a technical solution of locating and mapping respectively. The key to locating using magnetic field is to accurately distinguish the features of the magnetic field, and the technology used for distinguishing the characteristics of the magnetic field is generally based on Kalman filter or particle filter. However, the complexity of these two algorithms is high. When the indoor area is large, more data needed to be calculated and a long calculation time is consumed, which makes it difficult to achieve a real-time locating. In addition, when the indoor area is large, similar features may appear in different areas, which often results in locating errors, such as kidnapped robot problem and so on. Furthermore, for the locating method based on Kalman filter or particle filter, it is necessary to give an initial position of the object, which also needs to be obtained from other technical means other than magnetic field locating, so it is inconvenient to use.

Conventionally, in addition to the locating technology based on magnetic field, a variety of RFID (Radio Frequency IDentification)-based locating technologies have been invented owing to the widespread use of RFID technology. For example, a Chinese patent document (Patent Publication No. CN 102509059 A), proposes a method of indoor locating using RFID, which embeds an ultra wideband signal transmission module on the basis of RFID. An object carries out the information exchange with a reader by transmitting RF signals, and then the reader issues a locating command. After receiving the locating command, the object transmits an ultra wideband signal. The reader is connected with a number of receiving antennas. After each antenna receives the ultra wideband signal, an analog signal is transmitted from the antenna with the use of emulation technique, the highest energy gathering point is the object position. As another example, a Chinese patent application (Chinese Patent Application No. 201410201147.7) discloses a locating method, which lays fixed nodes and marks magnetic field information (including intensity and orientation) and location information at the fixed nodes in the server. After receiving the magnetic field information (including intensity and orientation) and the location information of the fixed nodes, a mobile node corrects its own location information by receiving the magnetic field information and the location information of the fixed nodes marked in the server. Here the magnetic field information of the fixed nodes is fixed. These techniques solve the problem of locating in specific environments. However, when a large number of RFID nodes are applied, various signal collisions, such as node collisions, reader collisions, and collisions between nodes and readers, will occur, thus resulting in a failure of RFID locating.

In addition, there exist other locating methods using IRID (Infrared Identification), WiFi and so on in the prior art. But they still cannot meet the higher requirements for locating accuracy.

### SUMMARY

In view of the above defects of the prior art, an objective of the present invention is to provide a method, apparatus and system for indoor locating with a low complexity, a small amount of calculation and a high accuracy.

According to one aspect of the present invention, a method for locating an object using cluster-type magnetic field is provided. The method may include: obtaining a wireless signal and a magnetic field signal; performing a first locating for an object according to the wireless signal; and performing a second locating for the object according to the magnetic field signal in the range of the first locating.

According to another aspect of the present invention, an apparatus for locating an object using cluster-type magnetic field is provided. The apparatus may include: a signal receiver for obtaining a wireless signal; a magnetic sensor for obtaining a magnetic field signal; a locating means for performing a first locating for an object according to the strength of the obtained wireless signal; and a prediction updating means for performing a second locating for the object based on the range determined by the first locating and the received magnetic field signal.

According to yet another aspect of the present invention, a system for locating an object using cluster-type magnetic field is provided. The system may include: an apparatus for indoor locating as above-mentioned; and a signal transmitter for transmitting a wireless signal.

Thus, according to the present invention, a space where an object to be located stays, can be divided into small spaces by a wireless signal such as an RFID signal, an IRID signal, a WIFI signal, a Bluetooth signal, etc. to form a cluster so as to perform a first rough locating for the object and then a precise locating for the object in the range of first locating, which not only reduces the area and data using a locating technology based on particle filter, but also avoids the kidnapped robot problem, thereby reducing the amount of calculation, lowering the complexity of the calculation, and improving the locating accuracy.

## BRIEF DESCRIPTION OF THE DRAWINGS

Fig. 1 is a flowchart showing a method for locating an object using cluster-type magnetic field according to an embodiment of the present invention;

Fig. 2 is a flowchart showing steps of performing a second locating for the object in Fig.1;

Fig. 3 is a flowchart showing a method for locating an object using cluster-type magnetic field according to another embodiment of the present invention;

Fig. 4(a) is a schematic diagram of indoor distribution of RF transmitters according to an embodiment of the present invention;

Fig. 4(b) is a schematic diagram of signal intensity distribution of Tag 5 in Fig.4(a);

Fig. 5(a) is a schematic diagram of simulation result of locating the object based on an RFID signal and a magnetic field signal;

Fig. 5(b) is a schematic diagram of simulation result of locating the object based on the magnetic field signal;

Fig. 6(a) is a schematic diagram of error comparison between locating of the object based on both the RFID signal and the magnetic field signal and that based on only the magnetic signal;

Fig. 6(b) is a schematic diagram of time comparison between locating of the object based on both the RFID signal and the magnetic field signal and that based only on the magnetic field signal;

Fig. 7 is a schematic block diagram of an apparatus for locating an object using cluster-type magnetic field according to an embodiment of the present invention; and

Fig. 8 is a schematic block diagram of a system for locating an object using cluster-type magnetic field according to an embodiment of the present invention.

## DETAILED DESCRIPTION

The present invention will be described in further detail in conjunction with the drawings.

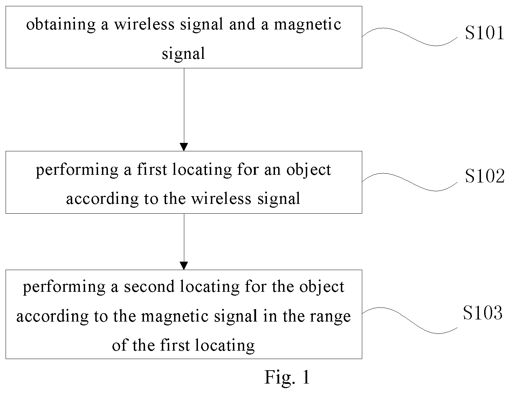

Fig. 1 schematically shows a flowchart of a method for locating an object using cluster-type magnetic field according to an embodiment of the present invention. As shown in Fig. 1, the method comprises:

S101: obtaining a wireless signal and a magnetic field signal.

In this embodiment, an object (such as a robot pushing a cart) can detect by means of its onboard magnetic signal detection unit a signal transmitted by an RF/IR transmitter and detect by means of its onboard magnetic field (such as geomagnetic) signal detector (for example, a MicroMag3 triaxial magnetometers produced by PNI Sensor Corporation can be adopted to measure indoor magnetic field) the geomagnetic field information of its current position.

S102: performing a first locating for an object according to the wireless signal.

In this embodiment, the first locating is determined by the Nearest Neighbor algorithm. The Nearest Neighbor algorithm is the easiest to understand, and simpler to implement. The algorithm generally only provides the relative location information of the object.

Generally, RF/IR transmitters may be arranged in many places within the locating area of a system, and their position coordinates are known. Therefore, when an object moves to a place near to a transmitter, a receiver will receive the corresponding radio frequency radio signal of corresponding RFID, and an approximate position of the object can be obtained. If the object receives signals from multiple transmitters at the same time, the position of the object can be determined by comparison of the intensity values of the received signals. The Nearest Neighbor algorithm as mentioned above is easy to implement with a low requirement on hardware. Therefore, this algorithm is very suitable for the applications where locating accuracy is not high. In this embodiment, maximum signal intensity is obtained by comparing the intensity values of the received signalt, and the signal range irradiated by the signal transmitter having the maximum signal intensity is a rough locating region of current position of the object.

S103: performing a second locating for the object according to the magnetic field signal in the range of the first locating.

In this embodiment, the method for indoor locating as mentioned above is especially suitable for an indoor global locating.

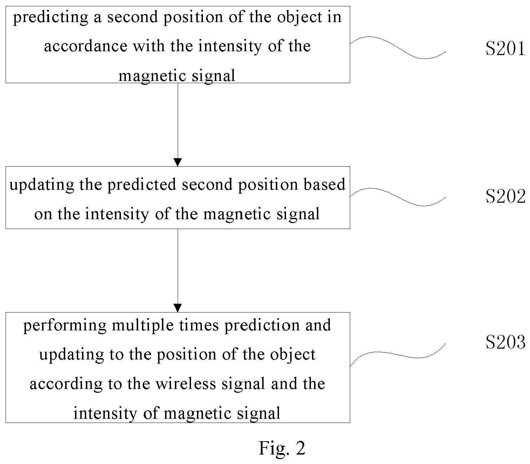

Fig.2 is a flowchart showing the step of performing a second locating for the object in Fig.1. As shown in Fig.2, the process includes:

S201: predicting a second position of the object in accordance with the intensity of the magnetic field signal;

In this embodiment, the particle filter algorithm can be used to predict the position of the object. The Bayes estimation of the particle filter algorithm is generally composed of two steps, i.e., predicting and updating. The ultimate aim of the algorithm is to obtain an updated value, that is, a posterior probability density of the object state, which is also the ultimate aim of the particle filter algorithm.

An analysis of the Bayes estimation is as follows: assuming that a state transition equation and an observation equation for a discrete system at time t can be represented as:

$$\begin{cases} x_t = f_t(x_{t-1}, v_t) \\ y_t = h_t(x_t, z_t, w_t) \end{cases} \quad (1)$$

In which $x_t$ is an X coordinate (it can be demarcated in advance according to the map. Then a position of the object in the map can be looked for according to the features of the object. Such method of demarcation and looking for is similar to GPS.) and a position state of the object at time t,

$y_t$ is an Y coordinate and a position state of the object at time t calculated by the observation equation,

$f_t$ is a function of the state transition equation for the state $x_{t-1}$ at time t,

$v_t$ is measuring noise,

$h_t$ is a function of the observation equation for the state $x_t$ at time t,

$z_t$ is the value of the magnetic field strength of the object at time t,

$w_t$ is observation noises.

In this embodiment, this state transition equation function indicates that the current state $X_t$ of the object is determined by its previous state $X_{t-1}$ and noises. In reality, this function is non-linear and unfixed due to the existence of orientation problems and can be obtained by multiple measurements and summarizing.

This observation function $Y_t$ is calculated based on intensity distribution of the signal in the grid map in combination of the detected signal of the object at the current position.

According to the Bayesian theory, assuming that the initial distribution function $p(x_0|y_0)$ is known. The initial distribution function is a uniform distribution function since the initial position of the object is randomly distributed. And then according to the Chapman-Kolmogorov equation and the assumption of the system being a first-order Markov process, the state prediction equation for the object can be obtained as:

$$p(x_t | z_{1:\, t-1}) = \int p(x_t | x_{t-1}) p(x_{t-1} | z_{1:\, t-1}) dx_{t-1} \quad (2)$$

Here $p(x_t|z_{1:\, t-1})$ is a posterior probability density distribution of the object at time t, and

$p(x_t|x_{t-1})$ is a prior probability density distribution of the object at time t.

S202: updating the predicted second position based on the wireless signal and the intensity of the magnetic field signal.

In this embodiment, after the value of the magnetic field intensity $z_t$ at time t is obtained, the Bayesian criterion is used to update the predicted value of state. The state updating equation is :

$$p\left(x_t|z_{1:t}\right) = \frac{p\left(z_t|x_t\right) p\left(x_t|z_{1:t-1}\right)}{\int p\left(z_t|x_t\right) p\left(x_t|z_{1:t-1}\right) dx_t} \quad (3)$$

Here $x_t$ indicates the coordinate and position state of moving object at time t (i.e., coordinate point and orientation of the object); $z_t$ indicates the value of magnetic field intensity of the object at time t; $p(x_0|y_0)$ indicates an initial distribution function.

Thus, the posterior probability density of the object (i.e., the current location of the object) can be calculated. And this iterative recursive relation constitutes the Bayesian estimation. The particle filtering is based on the law of large numbers using the Monte Carlo algorithm to achieve the integral operation of the Bayesian estimation. Its essence is to approximate the posterior probability density of the object using a random discrete measure composed by the particle positions and their different weights, and to update the random discrete measure by recursion of the algorithm. In this embodiment, the particle filtering algorithm is used to calculate the posteriori probability of the object in the Bayesian estimation.

In this embodiment, $\{v_t, t \in N\}$ indicates measurement noises, $\{w_t, t \in N\}$ indicates observation noises. In a system of RF transmitting and receiving, noises refer to an electrical signal that does not carry useful information. In such system, noises can be classified into radio noises, industrial noises, atmospheric electricity noises and internal noises, etc. according to the source of noises. Internal noises is the main source of noises among these noises, also known as fluctuation noises, which refers to thermal noises inside a channel, device noises and universe noises from space. Such noises are an irregular random process. For example, in a communication system, in order to perform the theoretical analysis and to calculate the system noises, it is generally assumed that the thermal noises inside a channel are Gaussian white noises. So in a system of RF transmitting and receiving, the noise source is assumed to be an additive noises combined by random noises and Gaussian white noises. In this embodiment, the added noises are random noises $(S \sim U[S_1, S_2])$ from RF system, Gaussian white noises $(N(0, \sigma_B^2))$ plus Gaussian white noises $(N(0, \sigma_B^2))$ from geomagnetic field system. An existing noise model (Gaussian white noise) can be directly used to simulate the experiment.

S203: performing prediction and updating of multiple times for the position of the object according to the intensity of the magnetic field signal.

In this embodiment, the accuracy of object locating can be greatly improved through such training of continuous prediction, updating, re-prediction and re-updating till to reach a certain number of times.

In this embodiment, wireless signal may be an RFID signal, an IRID signal, a WIFI signal, or a Bluetooth signal and so on. There is no special requirement on their locating accuracy, and the purpose is only to divide locating region.

In this embodiment, locating process is divided into two stages.

First stage: according to the distribution of the wireless signal and proximity algorithm, it is determined that the moving object is within the radiation range of a certain wireless signal (e.g., RFID / IRID signals). Since the radiation range of each RF signal is known and certain, the range of object position can be reduced within the radiation range of single RF signal.

Second stage: within the radiation range of the above-mentioned single RF signal, a more accurate position of the moving object is determined based on the particle filtering algorithm of the magnetic field fluctuation. Thus, the complexity of the algorithm is simplified, the computational complexity is reduced, and the locating accuracy is improved.

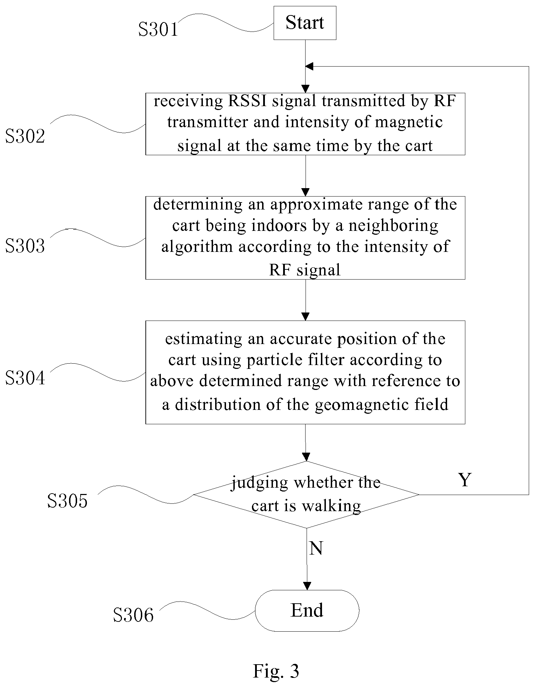

Fig. 3 is a flowchart showing a method for locating an object using cluster-type magnetic field according to another embodiment of the present invention. Taking as an example of locating a robot (i.e., above-mentioned object) of the hand-held cart. As shown in Fig. 3, the locating method comprises:

S301: start (initialization).

In this embodiment, the initial particles are uniformly distributed in the room, and the location of a particle is indicated by $X_0^{(i)}$ the weight of a particle is indicated by $\omega_0^{(i)} (i = 1, 2, ..., N_s)$, and the number of particles $N_s$ is 200.

In this embodiment, a particle is a certain point of algorithm, and each particle represents a possibility that the object position is within the current range of activity.

S302: the cart receives the RSSI signal transmitted by the RF transmitter and intensity of the magnetic field signal at the same time.

S303: First, the cart determines its approximate range in the room by means of the neighboring algorithm according to the intensity of the RSSI signal transmitted by the RF transmitter, i.e., performing a rough locating for the cart.

In this embodiment, the approximate range may be, for example, the number of meters around the determined RF transmitting node, the round area centered on the transmitting node or other related areas, or the radiation range of an RF signal and so on.

S304: estimating a relative accurate position of the robot of the hand-held cart using particle filter according to above determined range with reference to a distribution of the geomagnetic field within the radiation range of certain RF signal.

In this embodiment, $N_s$ particles are randomly sampled in the region obtained by above rough locating to acquire a "new" set of particles $X_t^{(i)}$ as an estimation of the probability distribution of the current location of the robot (i.e., the possible distribution of the location of the robot in the current range).

First, an approximate treatment of an object function is made by the use of random sampling in the way of importance sampling, i.e., based on the theory of Monte Carlo method. At time t, the state of each particle in the set of particles $X_t^{(i)}$ is updated to $X_t^{(i)}$ from $X_{t-1}^{(i)}$ according to a range determined by previous step of rough locating by the use of particle filter.

Secondly, the importance weight $\omega_t^{(i)}$ of the particles is calculated. The calculation of the importance weight is given in the following formula:

$$\omega_t^{(i)} = \frac{p(X_t^{(i)} \mid z_{1:t}, u_{0:t})}{q(X_t^{(i)} \mid z_{1:t}, u_{0:t})} \quad (4)$$

where $p(X_t^{(i)} \mid z_{1:t}, u_{0:t})$ is a true distribution of the object (i.e., a robot of the hand-held cart), $q(X_t^{(i)} \mid z_{1:t}, u_{0:t})$ is a proposed distribution of the object. They are different. The proposed distribution is estimated by experience, so the closer to the true distribution the proposed distribution is, the better. Generally, the true distribution is measured by accurate measurements.

A database used by this embodiment may be composed of three grid maps with the same size, which are represented by the magnetic field values of $\sqrt{H_X^2 + H_Y^2 + H_Z^2}$, $\sqrt{H_X^2 + H_Y^2}$ and $\sqrt{H_Z^2}$ respectively. The three magnetic field values are all scalar, they are field strength of geomagnetic field, horizontal component and vertical component respectively. Traditionally, $H_X$, $H_Y$ and $H_Z$ are not scalar. Since the moving direction of the object is random in practice, and $H_X$ and $H_Y$ will change with the moving direction of the object. Thus the gird distribution of $H_X$ and $H_Y$ will change. The values of $H_X$ and $H_Y$ will be affected by the direction of sensor, and then accuracy of the subsequent locating will be affected. In this embodiment, the errors of the three magnetic field values (their values are scalar), i.e., $\sqrt{H_X^2 + H_Y^2 + H_Z^2}$, $\sqrt{H_X^2 + H_Y^2}$ and $\sqrt{H_Z^2}$ can be reduced, thereby improving the accuracy of the subsequent locating.

Thirdly, the importance of the weight $\omega_t^{(i)}{}'$ is normalized by following formula (5),

$$\omega_t^{(i)'} = \omega_t^{(i)} \bigg/ \sum_{i=1}^{N_s} \omega_t^{(i)} \quad (5)$$

Finally, the exact position $\bar{X}_t$ of the object is calculated by following formula (6),

$$\bar{X}_t \approx \sum_{i=1}^{N_s} \omega_t^{(i)'} X_t^{(i)} \quad (6)$$

In this embodiment, the above process is an inherent step in the particle filter algorithm. The ultimate goal is to estimate the position of the object by accumulating the particles with weights.

S305: judging whether the robot the hand-held cart is moving.

In this embodiment, it is possible to determine whether or not the robot of the hand-held cart is walking by the movement state of the cart acquired by a motion state sensor.

When the cart is walking, jump to S302.

When the cart is stationary, jump to S306 to end.

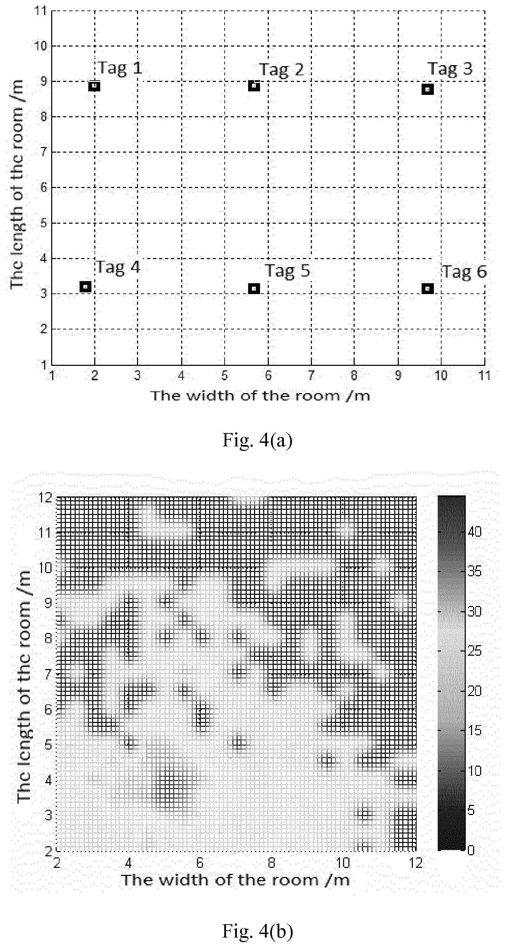

Figs. 4 to 6 are schematic diagrams showing the locating of an experimenter during walking in a laboratory.

Fig. 4(a) is a schematic diagram of indoor distribution of RF transmitters according to an embodiment of the present invention. As shown in Fig. 4(a), in the room of 10m * 10m, six RF transmitters are arranged evenly (corresponding to Tags 1, 2, 3, 4, 5 and 6 respectively).

Fig. 4(b) is a schematic diagram of signal intensity distribution of Tag 5 in Fig. 4(a). As shown in Fig. 4(b), the intensity distribution of the signal transmitted by the RF transmitter does not decrease linearly with distance from the transmitter, but rather shows a certain state of distribution within a certain range around the transmitter. The specific signal distribution can be referred to Fig. 4 (b). The signal intensity distributions of other tags (Tag 1, Tag 2, Tag 3, Tag 4 and Tag 6) set are similar to Tag 5. In order to verify the feasibility of the algorithm proposed in the present embodiment, the real magnetic field distribution data is measured by the MicroMag3 magnetic sensor chip in the present embodiment. The magnetic sensor chip can measure magnetic field values in three directions, vertical, horizontal and gravitational directions at the same time, that is, $H_X$, $H_Y$ and $H_Z$. The RF receiver detects the signal from the Tags.

First, the geomagnetic field data in the range of 10m*10m of room and signal distribution data of the RF transmitter's tags are measured through field measurements. Where a set of data is measured every other 0.5m and is averaged to get a total of 441 sets of data as a reference database which is imported to a data processing unit for the following data analysis.

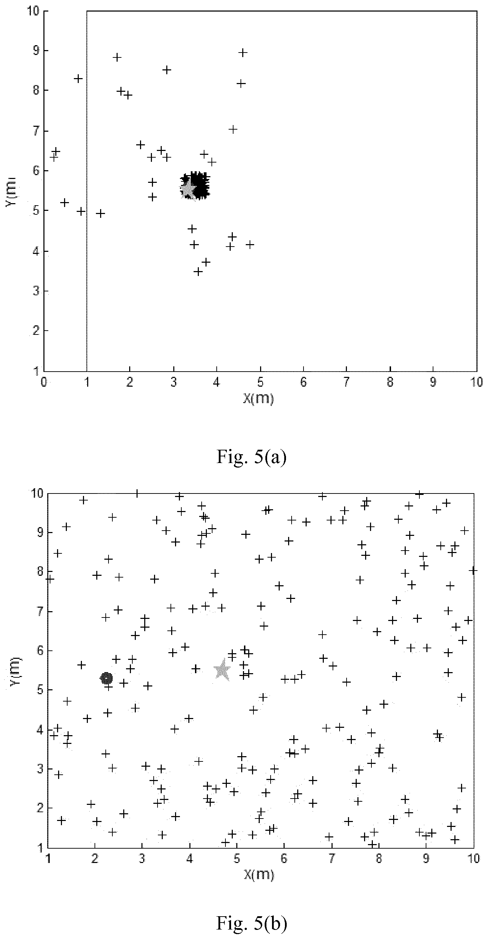

Fig. 5(a) is a schematic diagram of simulation result of locating an object based on the RFID signal and the magnetic field signal. Fig. 5(b) is a schematic diagram of simulation result of locating an object based on the magnetic field signal only.

As shown in Fig. 5(a) and Fig. 5(b), after the object (the robot of the hand-held cart) as described in Fig. 3 random walked two steps in the above-mentioned room, the "star" in the locating simulation diagram represents the position of the object estimated by the algorithm according to the steps S302-305 in the above-described embodiment. "Circle" (black) represents the actual position of the moving object. "Cross" is the case of particle distribution. Through a contrast between the two, it can be clearly seen that the "star" and "circle" in Fig. 5(a) have basically coincide, "cross" is distributed in the vicinity of "stars" and "circles". The "star" is on the right side of the "circle" and has a distance from it in Fig. 5 (b). Although there are some "cross" distributed in the vicinity of the "stars" and "circle", there are many "cross" distributed far away from them. This indicates that the locating accuracy based on the RFID signal and the magnetic field signal in Fig. 5 (a) is higher than that of based on the magnetic field signal only in Fig. 5(b). Moreover, Fig. 5 (a) is more precise in determining the location of the moving object in the room than the locating method of Fig. 5 (b), thereby improving the utilization and convergence of the particles.

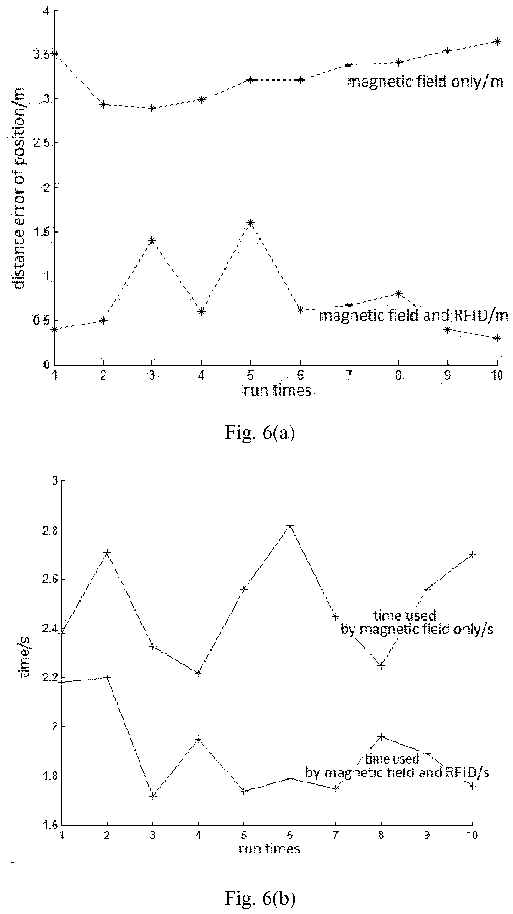

Fig. 6(a) is a schematic diagram of error comparison between locating of an object based on the RFID signal and the magnetic field signal and that based on the magnetic field signal only. Fig. 6(b) is a schematic diagram of time comparison between locating of an object based on the RFID signal and the magnetic field signal and that based on the magnetic field signal only.

In this embodiment, 10 simulations are experienced. The locating in each simulation is finished after the object walked two times. As shown in Fig. 6(a), a broken line above represents the error generated by locating based on the magnetic field signal only, the average distance error of locating is 3.3m or so. A broken line below represents the error generated by locating based on RFID and magnetic signals, and the average distance error of locating is about 0.7 m.

Fig. 6(b) is a schematic diagram of time comparison between locating of an object based on the RFID signal and the magnetic field signal and that based on the magnetic field signal only.

In this embodiment, 10 simulations are experienced. The locating in each simulation is finished after the object walked two times. As shown in Fig. 6(b), a broken line above represents the time required for each iteration of locating based on the magnetic field signal only, and its run time is around 2.4s. A broken line below represents the time required for each iteration of locating based on the RFID signal and the magnetic field signal, its run time is about 1.8s.

As can be seen from the above data, the method of the embodiment of the present invention not only greatly improves the accuracy of the object locating, but also reduces the time required for locating.

In this embodiment, there is no need to arrange a number of RF signal transmitters, and the problem of signal collision in the prior art using RFID signal alone can be solved at the same time. In addition, the indoor area can be divided into multiple small regions, so that the locating through the magnetic field can be realized more quickly and accurately. It should be noted that, the indoor area can also be divided by the positions of WIFI nodes. Therefore, WIFI, IRID, Bluetooth and other technologies can also be used in the present invention.

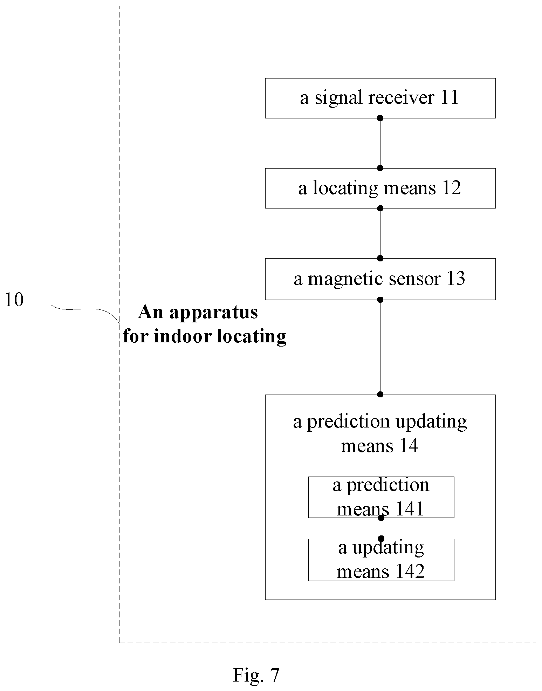

Fig. 7 is a schematic diagram of an apparatus for locating an object using cluster-type magnetic field according to an embodiment of the present invention. As shown in Fig. 7, an apparatus for indoor locating may include a signal receiver 11, a locating means 12, a magnetic sensor 13 and a prediction updating means 14.

The signal receiver 11 is used for obtaining a wireless signal.

In this embodiment, the magnetic sensor may, for example, use PNI Sensor Corporation's MicroMag3 triaxial magnetometer to measure the indoor magnetic signal.

The locating means 12 is to perform a first locating for an object according to the strength of the obtained wireless signal.

The magnetic sensor 13 is used for obtaining a magnetic field signal.

The prediction updating means 14 is used for performing a second locating for the object based on the range determined by the first locating and the received magnetic field signal.

In this embodiment, the prediction updating means 14 may include a prediction means 141 and an updating means 142.

The prediction means 141 is used for predicting a second position of the object according to the magnetic field signal obtained by the magnetic sensor. The updating means 142 is used for updating the predicted second position based on the predicted second position and the magnetic signal obtained by the magnetic sensor. The specific embodiments can be referred to the above-described method embodiment.

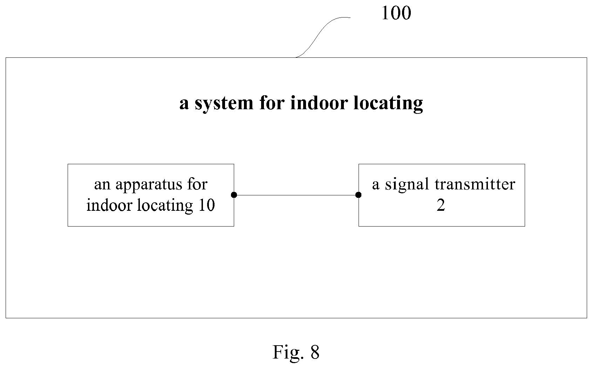

Fig. 8 is a schematic diagram of a system for locating an object using cluster-type magnetic field according to an embodiment of the present invention. As shown in Fig. 8, a system 100 for indoor locating may include the above-mentioned apparatus for indoor locating 10 and a signal transmitter 20.

Among them, the signal transmitter 30 is used for transmitting a wireless signal. The wireless signal may be an RFID signal, an IRID signal, a WIFI signal, or a Bluetooth signal, etc.

In this embodiment, various functions of related functional modules may be implemented by a hardware processor and various units so as to perform the method embodiments described above.

The embodiment of the apparatus described above is merely illustrative, wherein the unit described as separating component may or may not be physically separate, and the component shown as a unit may or may not be a physical unit, that is, it may be located a place, or it may be distributed to multiple network elements. The part or all of the modules may be selected according to the actual needs to achieve the objective of the present embodiment. Those of ordinary skilled in the art will understand and practice it without paying creative work.

With the description of the above embodiments, it will be apparent to those skilled in the art that the embodiments may be realized by means of software plus the necessary general hardware platform. Certainly, they may be implemented by hardware. Based on this, the above-mentioned technical solution or the part of them which contributes to the prior art, substantially may be embodied in the form of a software product that may be stored in a computer-readable storage medium such as ROM / RAM, magnetic Discs, optical disks, etc., including a number of instructions for enabling a computer device (which may be a personal computer, a server, or a network device, etc.) to perform methods described in various embodiments or part of embodiments.

The above are only some embodiments of the present invention. Those of ordinary skilled in the art will appreciate that a number of modifications and improvements to the present invention can also be made without departing from the idea of the invention, all of which are contained within the protection scope of the present invention.

**Claims**

1. A method for locating an object using cluster-type magnetic field, comprising:

   obtaining a wireless signal and a magnetic field signal;
   performing a first locating for an object according to the wireless signal; and
   performing a second locating for the object according to the magnetic field signal in the range of the first locating.

2. The method of claim 1, wherein performing a second locating for the object comprises:

   predicting a second position of the object at least once according to the intensity of the magnetic field signal; and
   performing a position updating of the predicted second position at least once according to the predicted second position and the intensity of the magnetic field signal.

3. The method of claim 1 or 2, wherein the magnetic field signal is represented by the magnetic field values of $\sqrt{H_X^2 + H_Y^2 + H_Z^2}$ , $\sqrt{H_X^2 + H_Y^2}$ and $\sqrt{H_Z^2}$ respectively, wherein $H_X$, $H_Y$ and $H_Z$ are the magnetic field values in three directions, vertical, horizontal and gravitational directions respectively.

4. The method of claim 2, wherein a state prediction equation for predicting the second position of the object is:

$$p\left(x_t | z_{1:\,t-1}\right) = \int p\left(x_t | x_{t-1}\right) p\left(x_{t-1} | z_{1:\,t-1}\right) dx_{t-1}$$

where $p(x_t|z_{1:\,t-1})$ is a posterior probability density distribution of the object at time t, $p(x_t|x_{t-1})$ is a prior probability density distribution of the object at time t;

and a state transition equation and an observation equation at time t are:

$$\begin{cases} x_t = f_t\left(x_{t-1}, v_t\right) \\ y_t = h_t\left(x_t, z_t, w_t\right) \end{cases}$$

where t is time, $t \in N$,

$x_t$ is an X coordinate and a position state of the object at time t,

$y_t$ is a Y coordinate and a position state of the object calculated by the observation equation at time t,

$f_t$ is a function of the state transition equation for the state $x_{t-1}$ at time t,

$v_t$ is measuring noises,

$h_t$ is a function of the observation equation for the state $x_t$ at time t,

$z_t$ is a value of the magnetic field strength of the object at time t,

$w_t$ is observation noise.

5. The method of claim 2, wherein a state updating equation for performing the position updating of the predicted second position is:

$$p\left(x_t | z_{1:\,t}\right) = \frac{p\left(z_t | x_t\right) p\left(x_t | z_{1:\,t-1}\right)}{\int p\left(z_t | x_t\right) p\left(x_t | z_{1:\,t-1}\right) dx_t},$$

where $p(z_t|x_t)$ is an important density function,

$p(x_t|z_{1:\,t-1})$ is a posterior probability density distribution of the object at time t.

6. The method of claim 5 further comprising:

Step A, collecting $N_s$ particles in the range of the first locating to acquire a set of particles $x_t^{(i)}$ having a weight value $\omega_t^{(i)}$, where i =1,2,3..., $N_s$;

Step B, obtaining an importance weight $\omega_t^{(i)}$ of the particles, $\omega_t^{(i)} = \dfrac{p(X_t^{(i)} | z_{1:t}, u_{0:t})}{q(X_t^{(i)} | z_{1:t}, u_{0:t})}$,

where $p(X_t^{(i)} | z_{1:t}, u_{0:t})$ is a true distribution of the object,

$q(X_t^{(i)} | z_{1:t}, u_{0:t})$ is a proposed distribution of the object;

Step C, normalizing the importance weight $\omega_t^{(i)}{}'$, $\omega_t^{(i)'} = \omega_t^{(i)} \Big/ \sum_{i=1}^{N_s} \omega_t^{(i)}$; and Step D, calculating an exact position $\hat{X}_t$ of the object,

$$\hat{X}_t \approx \sum_{i=1}^{N_s} \omega_t^{(i)'} X_t^{(i)}.$$

7. The method of any of claims 1 to 6, wherein the wireless signal comprises RFID signal, IRID signal, WIFI signal, and Bluetooth signal.

8. An apparatus for locating an object using cluster-type magnetic field, comprising:

a signal receiver for obtaining a wireless signal;

a magnetic sensor for obtaining a magnetic field signal;
a locating means for performing a first locating for an object according to the strength of the obtained wireless signal; and
a prediction updating means for performing a second locating for the object based on the range determined by the first locating and the received magnetic field signal.

9. The apparatus of claim 8, wherein the prediction updating means comprises:

a prediction means for predicting a second position of the object according to the magnetic field signal obtained by the magnetic sensor; and
an updating means for performing the position updating of the predicted second position based on the predicted second position and the magnetic field signal obtained by the magnetic sensor.

10. The apparatus of claim 9, wherein the magnetic field signal is represented by the magnetic field values of $\sqrt{H_X^2 + H_Y^2 + H_Z^2}$, $\sqrt{H_X^2 + H_Y^2}$ and $\sqrt{H_Z^2}$ respectively, wherein $H_X$, $H_Y$ and $H_Z$ are the magnetic field values in three directions, vertical, horizontal and gravitational directions respectively.

11. The apparatus of claim 10, wherein a state prediction equation for predicting the second position of the object is:

$$p\left(x_t | z_{1:\,t-1}\right) = \int p\left(x_t | x_{t-1}\right) p\left(x_{t-1} | z_{1:\,t-1}\right) dx_{t-1}$$

where $p(x_t|z_{1:\,t-1})$ is a posterior probability density distribution of the object at time t, $p(x_t|x_{t-1})$ is a prior probability density distribution of the object at time t; a state transition equation and an observation equation at time t are:

$$\begin{cases} x_t = f_t\left(x_{t-1}, v_t\right) \\ y_t = h_t\left(x_t, z_t, w_t\right) \end{cases}$$

where t is time, $t \in N$,
$x_t$ is an X coordinate and a position state of the object at time t,
$y_t$ is a Y coordinate and a position state of the object calculated by the observation equation at time t,
$f_t$ is a function of the state transition equation for the state $x_{t-1}$ at time t,
$v_t$ is measuring noises,
$h_t$ is a function of the observation equation for the state $x_t$ at time t,
$z_t$ is a value of the magnetic field strength of the object at time t,
$w_t$ is observation noise.

12. The apparatus of claim 10, wherein a state updating equation for performing the position updating of the predicted second position is:

$$p\left(x_t | z_{1:\,t}\right) = \frac{p\left(z_t | x_t\right) p\left(x_t | z_{1:\,t-1}\right)}{\int p\left(z_t | x_t\right) p\left(x_t | z_{1:\,t-1}\right) dx_t},$$

where $p(z_t|x_t)$ is an important density function,
$p(x_t|z_{1:\,t-1})$ is a posterior probability density distribution of the object at time t.

13. The apparatus of claim 12, wherein the prediction updating means is configured for conducting the following process:
Step A, collecting $N_s$ particles in the range of the first locating to acquire a set of particles $x_t^{(i)}$ having a weight value $\omega_t^{(i)}$, where i=1,2,3..., $N_s$;
Step B, obtaining an importance weight $\omega_t^{(i)}$ of the particles, $\omega_t^{(i)} = \frac{p(X_t^{(i)} | z_{1:t}, u_{0:t})}{q(X_t^{(i)} | z_{1:t}, u_{0:t})}$,

where $p(X_t^{(i)} \mid z_{1:t}, u_{0:t})$ is a true distribution of the object,

$q(X_t^{(i)} \mid z_{1:t}, u_{0:t})$ is a proposed distribution of the object;

Step C, normalizing the importance weight $\omega_t^{(i)}$', $\omega_t^{(i)'} = \omega_t^{(i)} \Big/ \sum_{i=1}^{N_s} \omega_t^{(i)}$; and Step D, calculating the

exact position $X_t$ of the object, $X_t \approx \sum_{i=1}^{N_s} \omega_t^{(i)'} X_t^{(i)}$.

14. A system for locating an object using cluster-type magnetic field, comprising:

an apparatus for indoor locating of any of claims 8 to 13; and
a signal transmitter for transmitting a wireless signal.

obtaining a wireless signal and a magnetic signal ⟋ S101

performing a first locating for an object according to the wireless signal ⟋ S102

performing a second locating for the object according to the magnetic signal in the range of the first locating ⟋ S103

Fig. 1

predicting a second position of the object in accordance with the intensity of the magnetic signal — S201

↓

updating the predicted second position based on the intensity of the magnetic signal — S202

↓

performing multiple times prediction and updating to the position of the object according to the wireless signal and the intensity of magnetic signal — S203

Fig. 2

S301 — Start

S302 — receiving RSSI signal transmitted by RF transmitter and intensity of magnetic signal at the same time by the cart

S303 — determining an approximate range of the cart being indoors by a neighboring algorithm according to the intensity of RF signal

S304 — estimating an accurate position of the cart using particle filter according to above determined range with reference to a distribution of the geomagnetic field

S305 — judging whether the cart is walking — Y

N

S306 — End

Fig. 3

Fig. 4(a)

Fig. 4(b)

Fig. 5(a)

Fig. 5(b)

Fig. 6(a)

Fig. 6(b)

Fig. 7

100

**a system for indoor locating**

| an apparatus for indoor locating 10 | —— | a signal transmitter 2 |

Fig. 8

# INTERNATIONAL SEARCH REPORT

| International application No. |
| --- |
| **PCT/CN2016/103427** |

**A. CLASSIFICATION OF SUBJECT MATTER**

G01S 5/02 (2010.01) i

According to International Patent Classification (IPC) or to both national classification and IPC

**B. FIELDS SEARCHED**

Minimum documentation searched (classification system followed by classification symbols)

G01S 5/-, ; G01C 21/08

Documentation searched other than minimum documentation to the extent that such documents are included in the fields searched

Electronic data base consulted during the international search (name of data base and, where practicable, search terms used)

CNPAT; WPI; EPODOC; CNKI: position+, locat+, wireless, RFID, IRID, WIFI, Bluetooth, Wlan, magnet+, signal, target, intensity, probability density, state, function

**C. DOCUMENTS CONSIDERED TO BE RELEVANT**

| Category* | Citation of document, with indication, where appropriate, of the relevant passages | Relevant to claim No. |
| --- | --- | --- |
| PX | CN 105676172 A (CHIGOO INTERACTIVE TECHNOLOGY CO., LTD.), 15 June 2016 (15.06.2016), description, paragraphs [0031]-[0058], [0068]-[0084] and [0102]-[0110], and figures 1-8 | 1-14 |
| Y | CN 104483658 A (HANGZHOU YUNXIANG NETWORK TECHNOLOGY CO., LTD.), 01 April 2015 (01.04.2015), description, paragraphs [0061]-[0063] and [0071]-[0098], and figures 1-2 | 1-3, 7-10, 14 |
| Y | CN 103476118 A (HARBIN INSTITUTE OF TECHNOLOGY), 25 December 2013 (25.12.2013), claim 1 | 1-3, 7-10, 14 |
| A | CN 104020447 A (MEMSIC SEMICONDUCTOR (WUXI) CO., LTD.), 03 September 2014 (03.09.2014), the whole document | 1-14 |
| A | CN 103630873 A (XIAMEN YAXUN NETWORK CO., LTD.), 12 March 2014 (12.03.2014), the whole document | 1-14 |
| A | US 7924218 B2 (AMERICAN SYSTEMS CORP. et al.), 12 April 2011 (12.04.2011), the whole document | 1-14 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 December 2016 (28.12.2016) | **26 January 2017 (26.01.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**YAN, Dong**<br><br>Telephone No.: (86-10) **62413530** |
| --- | --- |

Form PCT/ISA/210 (second sheet) (July 2009)

**INTERNATIONAL SEARCH REPORT**
Information on patent family members

| International application No. |
|---|
| **PCT/CN2016/103427** |

| Patent Documents referred in the Report | Publication Date | Patent Family | Publication Date |
|---|---|---|---|
| CN 105676172 A | 15 June 2016 | None | |
| CN 104483658 A | 01 April 2015 | CN 104483658 B | 24 August 2016 |
| CN 103476118 A | 25 December 2013 | CN 103476118 B | 23 March 2016 |
| CN 104020447 A | 03 September 2014 | None | |
| CN 103630873 A | 12 March 2014 | None | |
| US 7924218 B2 | 12 April 2011 | US 2010026559 A1 | 04 February 2010 |
| | | US 2006049978 A1 | 09 March 2006 |
| | | US 7236123 B2 | 26 June 2007 |
| | | AU 2005201238 A1 | 23 March 2006 |
| | | WO 2006036189 A2 | 06 April 2006 |
| | | EP 1825295 A2 | 29 August 2007 |
| | | AU 2005201238 B2 | 17 July 2008 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610016705
- CN 201310350209
- CN 201410277471
- CN 102509059 A
- CN 201410201147